# EUROPÄISCHE PATENTANMELDUNG

(11) **EP 3 309 526 A1**
(43) Veröffentlichungstag der Anmeldung: **18.04.2018**
(21) Anmeldenummer: 16193445.0
(22) Anmeldetag: 12.10.2016
(51) Int. Cl.: G01K 11/08

(54) **NACHWEISANORDNUNG**

(71) Anmelder: BIOTRONIK SE & Co. KG, 12359 Berlin (DE)
(72) Erfinder: Kalb, Hermann, 91052 Erlangen (DE); Januschke, Laura, 14169 Berlin (DE); Bauer, Moritz, 96146 Altendorf (DE)
(74) Vertreter: Galander, Marcus

(57) **Zusammenfassung**

Nachweisanordnung zur Erfassung der in einem Hochtemperatur-Ofenprozess aufgetretenen Maximaltemperatur und/oder des Wärmeeintrags in ein Werkstück, aufweisend eine Mehrzahl von metallischen Miniatur-Nachweiskörpern aus Legierungen mit sich je Nachweiskörper unterscheidender vorbestimmte Zusammensetzung und durch die vorbestimmte Zusammensetzung bedingter unterschiedlichen Schmelztemperatur und/oder mit unterschiedlicher Masse und durch die Masse bedingtem unterschiedlichem Schmelzverhalten.

## Beschreibung

Die Erfindung betrifft eine Nachweisanordnung zur Erfassung der in einem Hochtemperatur-Ofenprozess aufgetretenen Maximaltemperatur und/oder des Wärmeeintrags in ein Werkstück sowie ein entsprechendes Nachweisverfahren und schließlich ein Verfahren zur Herstellung einer solchen Nachweisanordnung.

In zahlreichen technischen Gebieten sind in Öfen ausgeführte thermische Behandlungen von Werkstücken seit langem - teilweise seit Jahrhunderten - massenhaft praktizierte und bewährte Verfahren. Um eine reproduzierbare Verfahrensführung und somit gleichbleibende Qualität der Verfahrensprodukte gemäß den an sie gestellten Anforderungen zu gewährleisten und um Ausschuss zu vermeiden, ist eine präzise Erfassung zumindest der im Prozess erreichten Maximaltemperatur und/oder des Wärmeeintrags in die Werkstücke erforderlich. Hierfür wurden verschiedene brauchbare Verfahren entwickelt, unter denen die Temperaturmessung mit Temperaturelementen (also auf elektronischem Wege) und mittels infrarotoptischer Sensoren große Verbreitung gefunden haben.

Seit langem bekannt ist auch der Einsatz von Probe- bzw. Nachweiskörpern in Ofenprozessen der Keramikindustrie, speziell der sogenannten Segerkegel oder Buller-Ringe. Bei den Segerkegeln handelt es sich um pyramidenförmige Körper, die im Wesentlichen aus Siliziumdioxid und Aluminiumoxid in vorbestimmten Anteilen zusammengesetzt sind und je nach konkretem Gehalt der beiden Komponenten bei unterschiedlichen Temperaturen erweichen ("fallen"). Je nach erwarteter Maximaltemperatur im zu überprüfenden Ofenprozess wird eine Auswahl von Segerkegeln, deren Erweichungstemperaturen im Bereich der erwarteten Maximaltemperatur liegen, zusammen mit den Werkstücken in den Prozess-Ofen gegeben.

Nach Abschluss des Prozesses erkennt man daran, welche Segerkegel mit welchen Erweichungstemperaturen gefallen sind, die im Prozess erreichte Maximaltemperatur.

Buller-Ringe sind ringförmige Nachweiskörper, die den gesamten Energieeintrag (inklusive Haltezeit und Abkühlphase) in die Werkstücke während eines Hochtemperatur-Ofenprozesses dadurch dokumentieren, dass sie einer vom Energieeintrag abhängigen Schrumpfung unterliegen. Die Schrumpfung kann nach Prozessende durch einfachen Größenvergleich mit dem ursprünglichen Buller-Ring bestimmt werden. Anders als bei den Segerkegeln ist auch nur jeweils ein einzelner Nachweiskörper für die Energiemengenüberwachung im Prozess erforderlich. Jedoch werden die Buller-Ringe für unterschiedliche Temperaturbereiche zwischen etwa 750°C und über 1400°C in unterschiedlichen Zusammensetzungen bereitgestellt; sie bestehen aus keramischem Material.

Die US 3,002,385 offenbart Temperaturanzeigeelemente, die durch eine spezifische Farbänderung Temperaturen anzeigen, denen sie ausgesetzt waren, und die speziell bei Werkstücken eingesetzt werden sollen, die einer Wärmebehandlung zu unterziehen sind. Speziell wird hier der Einsatz organischer und von Mischungen anorganischer Salze auf einer geschwärzten Metallfolie vorgeschlagen.

In der US 3,704,985 werden Temperaturanzeigeelemente vorgeschlagen, die in einem mehrschichtigen Aufbau organische Verbindungen enthalten, welche bei vorbestimmten Temperaturen einer visuell erfassbaren Zustandsänderung unterliegen. Die Nachweisanordnung ist insbesondere für die Temperaturmessung am menschlichen Körper vorgesehen und für entsprechende Temperaturen, nicht aber für Hochtemperatur-Ofenprozesse konstruiert.

Die erwähnten elektronischen und infrarotoptischen Verfahren erfordern, dass der Ort der Temperatur- bzw. Wärmemengenmessung im Prozess-Ofen mechanisch/elektrisch zugänglich ist bzw. frei im "Sichtfeld" eines Infrarotsensors liegt. Bei schwer zugänglichen oder verdeckten Orten für gewünschte Messungen sind solche Verfahren daher nur eingeschränkt oder gar nicht einsetzbar. Die erwähnten bekannten Nachweiskörper, vor allem die Segerkegel, sind relativ voluminös und eignen sich daher vorrangig für den Einsatz in großen Prozess-Öfen mit relativ großvolumigen Werkstücken.

Der Erfindung liegt die Aufgabe zugrunde, eine Nachweisanordnung für spezielle Anwendungen bereitzustellen, die insbesondere eine Temperatur- bzw. WärmemengenErfassung bei Prozessen ermöglicht, bei denen die bekannten Messverfahren bzw. Nachweiskörper nicht oder nur eingeschränkt einsetzbar sind. Es soll des Weiteren ein entsprechendes Messverfahren sowie ein Verfahren zur Herstellung der Nachweiskörper angeben werden.

Diese Aufgabe wird in ihrem Vorrichtungsaspekt durch eine Nachweisanordnung mit den Merkmalen des Anspruchs 1 und in ihren relativ unabhängigen Verfahrensaspekten durch ein Nachweisverfahren mit den Merkmalen des Anspruchs 1 oder ein Herstellungsverfahren mit den Merkmalen eines der Ansprüche 11, 14 oder 15 gelöst. Zweckmäßige Ausgestaltungen des Erfindungsgedankens sind Gegenstand der jeweiligen abhängigen Ansprüche.

Die Erfindung schließt gemäß einem ersten Aspekt den Gedanken ein, als Nachweisanordnung eine Gruppe miniaturisierter metallischer Nachweiskörper bereitzustellen, die leicht an schwer zugänglichen und/oder durch eine optische Sensorik nicht überwachbaren Stellen eines Prozess-Ofens oder insbesondere auch innerhalb eines komplexeren Werkstücks platziert werden können. Sie schließt weiter den Gedanken ein, diese Gruppe von Nachweiskörpern mit sich je Nachweiskörper unterscheidender vorbestimmten Zusammensetzungen und durch die vorbestimmte Zusammensetzung bedingten unterschiedlichen Schmelztemperaturen zu bilden. Kombiniert hiermit, oder auch in einer alternativen Ausprägung dieses Erfindungsgedankens wird die Gruppe mit sich je Nachweiskörper mit unterschiedlicher Masse und durch die Masse bedingtem unterschiedlichem Schmelzverhalten gebildet.

Der Begriff "Miniatur-Nachweiskörper" wird hier zur Abgrenzung gegenüber den für ähnliche Aufgaben bekannten Probekörpern, insbesondere Segerkegeln und Buller-Ringen gebraucht und bezeichnet gegenüber diesen deutlich verkleinerte Nachweiskörper.

Insbesondere haben diese, wenn man sie sich angenähert würfelförmig vorstellt, eine Kantenlänge zwischen ca. 0,1 mm und ca. 2 mm, oder in zylindrischer Ausführung einen Durchmesser und eine Höhe zwischen ca. 0,1 mm und ca. 2 mm, also ein Volumen im Bereich zwischen ca. 0,001 und 10 mm³, noch spezieller im Bereich zwischen 0,01 und 1 mm³. Die Erfindung kann jedoch auch mit Nachweiskörpern realisiert werden, deren Abmessungen sich von diesen Angaben etwas unterscheiden.

Mit der Erfindung lassen sich zumindest Vorteile bei der Prozessentwicklung von Hochtemperatur-Ofenprozessen, bei der Prozessüberwachung (durch Sicherstellung von nicht überschrittenen Obergrenzen und nicht unterschrittenen Untergrenzen prozessrelevanter Temperaturbereich, hinsichtlich der Qualitätskontrolle und Prozess-Dokumentation für Kunden sowie auch hinsichtlich der Simulation von Wärmeübergängen zwischen verschieden Orten eines komplexeren Werkstücks erzielen.

Entsprechend den oben erwähnten Aspekten haben in bestimmten Ausführungen der Erfindung alle Nachweiskörper gleiche Größe und geometrische Konfiguration, aber jeweils stufenweise unterschiedliche Anteile mindestens eines Legierungsbestandteils. In der anderen Ausprägung haben bevorzugt alle Nachweiskörper die gleiche Zusammensetzung und geometrische Konfiguration, aber unterschiedliche Größe. Für gewisse Anwendungen können beide Ausprägungen auch kombiniert sein, d. h. es können sowohl Nachweiskörper mit gleicher Größe, aber unterschiedlichen Legierungen und somit unterschiedlichen Schmelztemperaturen, als auch in ihrer Größe abgestufte Nachweiskörper von der Nachweisanordnung umfasst sein.

Für praktisch relevante Temperatur-Ofenprozesse sind Ausführungen bedeutsam, in denen mindestens ein Teil der Nachweiskörper Kupfer und Silber als Legierungsbestandteile aufweisen, wobei zur Realisierung unterschiedlicher vorbestimmter Schmelztemperaturen der Silbergehalt zwischen den einzelnen Nachweiskörpern variiert. In weiteren Ausführungen weist mindestens ein Teil der Nachweiskörper Kobalt und Nickel als Legierungsbestandteile auf, wobei zur Realisierung unterschiedlicher vorbestimmter Schmelztemperaturen der Kobalt- und/oder Nickelgehalt zwischen den einzelnen Nachweiskörpern variiert. In weiteren Ausführungen sind auch Legierungen mit Zinn- bzw. Mangan-Anteilen oder Legierungen auf Goldbasis einsetzbar, wobei die jeweilige Zusammensetzung in Abhängigkeit vom zu überwachenden Temperaturbereich, von den Anforderungen hinsichtlich der Erfassungsgenauigkeit und von den Einsatzgebieten des Bauteils bestimmt werden.

Die oben beschriebenen Legierungs-Zusammensetzungen sind aus derzeitiger Sicht gut für Prozesse zur Herstellung oder Behandlung von Komponenten medizinischer Implantate geeignet, die bei Temperaturen von annähernd oder über 1000°C hergestellt oder behandelt werden und bei denen gegebenenfalls eine Temperatur- bzw. Wärmeeintrags-Erfassung im Inneren eines komplexeren Werkstücks wünschenswert ist.

In einer technologisch vorteilhaften Ausführung sind die Nachweiskörper zylindrisch geformt, können also insbesondere durch Ablängen eines gezogenen Drahtes einfach und kostengünstig gebildet werden. Auch quader- oder speziell würfelförmige Ausführungen sind in ähnlicher Weise leicht herstellbar.

In weiteren Ausführungen sind die Nachweiskörper in an ihre geometrische Konfiguration angepassten Vertiefungen eines Nachweis-Trägersubstrats, insbesondere in einer Reihe oder Matrix, angeordnet. Allgemein ist es von Vorteil, wenn die Nachweisanordnung einen Träger zur definierten und eindeutig gekennzeichneten Aufnahme der Gruppe von Nachweiskörpern und zur reproduzierbaren Verfolgung ihrer Erweichung bzw. ihres Aufschmelzens aufweist. Ein solcher Träger muss aber nicht notwendigerweise eine Vertiefung für jeden einzelnen Nachweiskörper haben. Wenn jedoch Vertiefungen vorgesehen sind, sind diese vorteilhafterweise etwas größer bemessen als die Nachweiskörper selbst, so dass ein vollständiges oder teilweises Aufschmelzen auf den ersten Blick sichtbar wird.

Das erfindungsgemäße Nachweisverfahren zeichnet sich zunächst durch den Einsatz der vorstehend erläuterten Nachweisanordnung aus. In einer für gewisse kritische Anwendungen vorteilhaften Ausführung zeichnet es sich zudem dadurch aus, dass diese Nachweisanordnung in das Innere eines zu behandelnden Werkstücks gebracht und während des Hochtemperatur-Ofenprozesses dort belassen wird. Dies ermöglicht die Temperatur- bzw. Wärmeeintrags-Erfassung an exakt der gewünschten, für sonstige Messverfahren schwer zugänglichen bzw. nicht sichtbaren Stelle.

In einer weiteren praktisch wichtigen Ausführung umfasst das Verfahren die Schritte einer parallelen Temperaturmessung mittels eines infrarotoptischen oder elektronischen Messverfahrens und die Kalibrierung des Ergebnisses des infrarotoptischen oder elektronischen Messverfahrens anhand der sich aus der Inspektion der Nachweiskörper ergebenden Maximaltemperatur.

In einer weiteren Ausführung des Nachweisverfahrens wird der Wärmeeintrag in das Werkstück aufgrund einer vorbestimmten Relation zwischen dem aufgeschmolzenen Anteil des/der teilweise oder vollständig aufgeschmolzenen Nachweiskörper(s) oder der hieraus ermittelten in den Nachweiskörper eingetragenen Wärmemenge und dem Wärmeaufnahmevermögen des Werkstücks ermittelt. Diese Ausführung erfordert also vorgelagerte Durchführung des Verfahrens unter parallelem Einsatz anderer Messverfahren zur Bestimmung des Wärmeaufnahmevermögens eines konkreten Werkstücks oder aber vorgelagerte entsprechende Berechnungen bzw. Simulationen.

Gemäß einem weiteren relativ unabhängigen Aspekt umfasst die Erfindung die Herstellung einer Nachweisanordnung der weiter oben erläuterten Art, wobei eine Serie von Nachweiskörpern in effizienter Weise in einer Folge von Aufschmelz- und Abkühlvorgängen jeweils unter Zugabe einer vorbestimmten kleinen Menge (mindestens) eines Legierungsbestandteils.

In vorteilhafter Weise wird hierbei das Bilden der Nachweiskörper jeweils durch Abgießen in eine zylindrische Gussform und Erstarren in derselben ausgeführt. Aus der Gussform können Nachweiskörper mit ebenfalls zylindrischer Form einfach durch Zerschneiden bzw. Ablängen gebildet werden.

Insgesamt ist in Ausführungen dieses Verfahrens die Bildung von Nachweiskörpern unterschiedlicher Größe durch Nach-Verformen und/oder Ablängen eines Primär-Nachweiskörpers, insbesondere durch Ziehen eines Drahtes aus einem zylindrischen Primär-Nachweiskörper und wahlweise Ablängen des Drahtes, möglich.

In weiteren Varianten des Herstellungsverfahrens der Nachweisanordnung wird von pulverisierten Legierungsbestandteilen oder als Blech oder Folie vorliegenden Legierungsbestandteilen ausgegangen, und die Nachweiskörper in den gewünschten Mischungsverhältnissen werden durch Abwiegen der Pulver und durch Mischen und Verpressen oder Sintern, wahlweise mit zusätzlichem Aufschmelzen, der Pulvermischungen oder Aufschmelzen der zusammengestellten Blech- bzw. Folienzuschnitte erzeugt.

In einer noch weiteren Variante des Verfahrens zur Herstellung der Nachweisanordnung werden die einzelnen Nachweiskörper unter Einsatz eines Zonenschmelzverfahrens, wie grundsätzlich aus der Kristallzüchtung bekannt, und geeignetes Zerteilen einer hierin gewonnenen Preform erzeugt.

Vorteile und Zweckmäßigkeiten der Erfindung ergeben sich im Übrigen aus der nachfolgenden Beschreibung von Ausführungsbeispielen, teilweise anhand der Figuren. Von diesen zeigen:
- Fig. 1A und 1B: skizzenartige Darstellungen einer ersten Ausführungsform der erfindungsgemäßen Nachweisanordnung und
- Fig. 2A und 2B: skizzenartige Darstellungen einer zweiten Ausführungsform der erfindungsgemäßen Nachweisanordnung.

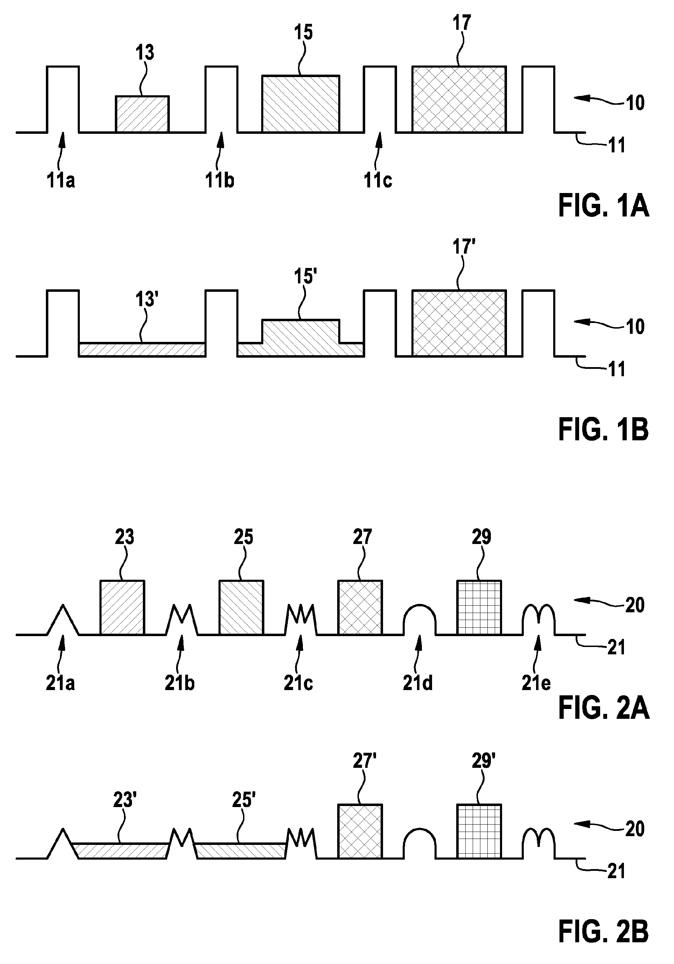

Fig. 1A und 1B zeigen schematisch in Art von Querschnittsdarstellungen eine Nachweisanordnung 10 mit einem Träger 11, der drei Vertiefungen 11a, 11b und 11c zur Aufnahme je eines Nachweiskörpers 13, 15 und 17 zur Erfassung eines Wärmeeintrags während eines Hochtemperatur-Ofenprozesses hat. Fig. 1A stellt den Zustand der Nachweisanordnung 10 vor dem Prozess dar und Fig. 1B stellt den Zustand nach dem Prozess dar.

Die Nachweiskörper 13, 15 und 17 bestehen aus dem gleichen Material, nämlich einer Legierung, deren Schmelzpunkt im Bereich der im Hochtemperatur-Ofenprozess erreichten Maximaltemperatur liegt, unterscheiden sich aber hinsichtlich ihrer Abmessungen (etwa des Durchmessers und der Höhe eines zylindrisch geformten Körpers) und somit hinsichtlich ihres Aufschmelzverhaltens bei einer bestimmten im Prozess entwickelten Wärmemenge. Dies führt dazu, dass bei geeigneter Auswahl der Nachweiskörper ein mindestens teilweises Aufschmelzen mindestens eines der Nachweiskörper erfolgt und der Grad des Aufschmelzens Aufschluss über die aufgenommene Wärmemenge gibt.

Im Beispiel ist, wie in Fig. 1B zu erkennen, der kleinste Nachweiskörper 13 vollständig in eine (nach Entnahme der Nachweisanordnung aus dem Ofen typischerweise erstarrte) Schmelze 13' zerflossen, der mittelgroße Nachweiskörper 15' ist teilweise aufgeschmolzen, und beim größten Nachweiskörper 17 hat die Wärmemenge zu einem Aufschmelzen nicht ausgereicht, so dass dieser eine gegenüber dem Ausgangszustand (Ziffer 17 in Fig. 1A) unveränderte Form hat.

Fig. 2A und 2B zeigen, wiederum in Art von Querschnittsdarstellungen, eine weitere Nachweisanordnung 20, die speziell zur Erfassung einer in einem Hochtemperatur-Ofenprozess aufgetretene Maximaltemperatur konzipiert ist. Die Nachweisanordnung 20 umfasst vier auf einem Träger 21 stehende Nachweiskörper 23, 25, 27 und 29 mit jeweils einer zugeordneten, in den Träger eingearbeiteten Kennzeichnung 21 a, 21 b, 21 c, 21 d (und einer Kennzeichnung 21e als Trägerenden-Kennzeichnung). Die Nachweiskörper 23 - 29 haben die gleiche geometrische Form und sind gleich groß, unterscheiden sich jedoch in ihrer Legierungs-Zusammensetzung und der dadurch bedingten Schmelztemperatur. Im Beispiel sind die Trägerkörper 23 - 29 von links nach rechts mit aufsteigender Schmelztemperatur gewählt

Bei einem beispielhaften Hochtemperatur-Ofenprozess sind, wie in Fig. 2B dargestellt, die Nachweiskörper 23 und 25 zu Schmelzbädern 23' und 25' aufgeschmolzen, während die Trägerkörper 27' und 29' noch ihre ursprüngliche Form haben, also kein (auch nur partielles) Aufschmelzen stattgefunden hat. Daraus ist zu schließen, dass die Maximaltemperatur im Prozess zwischen der Aufschmelztemperatur der Nachweiskörper 23 und 25 und derjenigen der Nachweiskörper 27 und 29 gelegen hat.

Für den Temperaturbereich von 1040 - 1085°C können z. B. folgende Legierungszusammensetzungen zur Herstellung der Probekörper gewählt werden:

| Verbindung | Schmelzpunkt |
|---|---|
| CuAg10 | 1040°C |
| CuAg7.5 | 1050°C |
| CuAg5 | 1060°C |
| CuAg2.5 | 1070°C |
| Cu | 1085°C |

Ausführungsbeispiele für die Herstellung der Nachweiskörper :
1) Es wird eine Schmelze eines Legierungsmaterials (z. B. Cu) mit geringstem Legierungsanteil des anderen Legierungsmaterials (z. B. Ag) erstellt, diese dann homogenisiert, geläutert und abgegossen. Nach Zugabe einer weiteren Menge des zweiten Legierungsmaterials (Ag) und Wiederholen der Schritte wird ein weiterer Nachweiskörper abgegossen. Durch schrittweise Erhöhung des Legierungsanteils entstehen Schmelzen verschiedener Legierungszusammensetzung. Als Abgussgeometrie kann z. B. ein dicker Draht gewählt werden. Durch Ziehen dieses Drahtes zu verschiedenen Durchmessern und Abschneiden an verschiedenen Positionen kann die Größe der einzelnen Nachweiskörper variiert werden.
2) Erstellung der Legierung aus Pulver in entsprechendem Misch-Verhältnis aus den Pulvern der Reinmaterialien, Verpressen der Pulver und ggf. Schmelzen. Das Schmelzen von Kugeln erfolgt beispielsweise in Graphittiegeln, die inert gegenüber Benetzung mit der Legierungsschmelze sind. Alternativ zum Pulver können Zuschnitte aus Folien verschiedener Dicke gestanzt werden. Durch Kombination verschiedener Foliendicken der Legierungselemente und Aufschmelzen der Materialien wird eine gewünschte Legierungszusammensetzung erreicht.
3) Analog zum Zonenschmelzen zur Reinigung bei Si-Wafern, bei der sich in der flüssigen Zone Verunreinigungen anreichern und damit ein Kristall gereinigt wird, so kann bei einer Preform aus zwei Elementen (z. B. Ag, Cu) ein Aufkonzentrieren der bereits überwiegenden Komponente erfolgen, indem man das Zonenschmelzverfahren anwendet. Führt man dieses Aufkonzentrieren entlang des Stabes mit verschiedener Intensität durch (in manchem Bereichen mehrfach durchführen bzw. der Schmelze mehr Zeit geben), so entstehen Bereiche verschiedene Legierungszusammensetzung. Diese werden nachfolgend durch einen Schneideprozess getrennt und Nachweiskörper daraus hergestellt. Alternativ kann die Aufkonzentration eines Elements durch Dotierung eines Stabs mit einer metallischen Komponente mit Durchführung des Zonenschmelzverfahrens erfolgen, so dass das Metall in den Kristall des Stabs eingebaut wird.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Nachweisanordnung (10; 20) zur Erfassung der in einem Hochtemperatur-Ofenprozess aufgetretenen Maximaltemperatur und/oder des Wärmeeintrags in ein Werkstück, aufweisend eine Mehrzahl von metallischen Miniatur-Nachweiskörpern (13, 15, 17; 23, 25, 27, 29) aus Legierungen mit sich je Nachweiskörper unterscheidender vorbestimmte Zusammensetzung und durch die vorbestimmte Zusammensetzung bedingter unterschiedlichen Schmelztemperatur und/oder mit unterschiedlicher Masse und durch die Masse bedingtem unterschiedlichem Schmelzverhalten.

2. Nachweisanordnung nach Anspruch 1, wobei alle Nachweiskörper (23, 25, 27, 29) gleiche Größe, insbesondere ein Volumen im Bereich zwischen 0,001 und 10 mm³, noch spezieller im Bereich zwischen 0,01 und 1 mm³, und geometrische Konfiguration, aber jeweils stufenweise unterschiedliche Anteile mindestens eines Legierungsbestandteils haben.

3. Nachweisanordnung nach Anspruch 1, wobei alle Nachweiskörper (13, 15, 17) die gleiche Zusammensetzung und geometrische Konfiguration, aber unterschiedliche Größe insbesondere ein Volumen im Bereich zwischen 0,001 und 10 mm³, noch spezieller im Bereich zwischen 0,01 und 1 mm³, haben.

4. Nachweisanordnung nach einem der vorangehenden Ansprüche, wobei mindestens ein Teil der Nachweiskörper (13, 15, 17; 23, 25, 27, 29) Kupfer und Silber als Legierungsbestandteile aufweist, wobei zur Realisierung unterschiedlicher vorbestimmter Schmelztemperaturen der Silbergehalt zwischen den einzelnen Nachweiskörpern variiert.

5. Nachweisanordnung nach einem der vorangehenden Ansprüche, wobei mindestens ein Teil der Nachweiskörper (13, 15, 17; 23, 25, 27, 29) Kobalt und Nickel als Legierungsbestandteile aufweist, wobei zur Realisierung unterschiedlicher vorbestimmter Schmelztemperaturen der Kobalt- und/oder Nickelgehalt zwischen den einzelnen Nachweiskörpern variiert.

6. Nachweisanordnung nach einem der vorangehenden Ansprüche, wobei die Nachweiskörper (13, 15, 17; 23, 25, 27, 29) zylindrisch geformt sind.

7. Nachweisanordnung nach einem der vorangehenden Ansprüche, wobei die Nachweiskörper (13, 15, 17; 23, 25, 27, 29) in an ihre geometrische Konfiguration angepassten Vertiefungen eines Nachweis-Trägersubstrats (11; 21), insbesondere in einer Reihe oder Matrix, angeordnet sind.

8. Nachweisverfahren zur Erfassung der in einem Hochtemperatur-Ofenprozess aufgetretenen Maximaltemperatur und/oder des Wärmeeintrags in ein Werkstück, mit den Schritten:
(a) Verbringen einer Nachweisanordnung (11; 21) nach einem der vorangehenden Ansprüche in einen Prozess-Ofen,
(b) Ausführung des Hochtemperatur-Ofenprozesses im Prozess-Ofen,
(c) Inspektion der Nachweisanordnung zur Feststellung, welche(r) der Nachweiskörper (13, 15, 17; 23, 25, 27, 29) bzw. zu welchem Anteil einer oder mehrere der Nachweiskörper aufgeschmolzen ist/sind, und
(d) Bestimmen der Maximaltemperatur und/oder eingetragenen Wärmemenge aufgrund des Inspektionsergebnisses und der vorbestimmten Schmelztemperatur des/der aufgeschmolzenen Nachweiskörper(s) bzw. des aufgeschmolzenen Anteils, insbesondere im Vergleich zu in einem Kalibrierungs-Prozess behandelten gleichartigen Nachweiskörpern.

9. Nachweisverfahren nach Anspruch 8, weiter aufweisend die Schritte
(b1) Temperaturmessung mittels eines infrarotoptischen oder elektronischen Messverfahrens und
(d1) Kalibrierung des Ergebnisses des infrarotoptischen oder elektronischen Messverfahrens anhand der sich aus dem Schritt (d) ergebenden Maximaltemperatur.

10. Nachweisverfahren nach Anspruch 8 oder 9, wobei der Wärmeeintrag in das Werkstück aufgrund einer vorbestimmten Relation zwischen dem aufgeschmolzenen Anteil des/der teilweise oder vollständig aufgeschmolzenen Nachweiskörper(s) (13, 15, 17; 23, 25, 27, 29) oder der hieraus ermittelten in den Nachweiskörper eingetragenen Wärmemenge und dem Wärmeaufnahmevermögen des Werkstücks ermittelt wird.

11. Verfahren zur Herstellung einer Nachweisanordnung (10; 20) nach einem der Ansprüche 1 bis 7, wobei ausgehend von einem reinen ersten Metall als Legierungsbestandteil oder einer Primär-Legierungszusammensetzung die Mehrzahl von Nachweiskörpern in mehreren aufeinanderfolgenden Schritten durch wiederholtes Aufschmelzen jeweils unter Zugabe eines weiteren Anteils eines zweiten Metalls als Legierungsbestandteil aufgeschmolzen und anschließend jeweils abgekühlt und jeweils ein Nachweiskörper aus der abgekühlten Schmelze gebildet wird.

12. Verfahren nach Anspruch 11, wobei das Bilden der Nachweiskörper (13, 15, 17; 23, 25, 27, 29) jeweils durch Abgießen in eine zylindrische Gussform und Erstarren in derselben ausgeführt wird.

13. Verfahren nach Anspruch 11 oder 12, wobei Nachweiskörper unterschiedlicher Größe durch Nach-Verformen und/oder Ablängen eines Primär-Nachweiskörpers, insbesondere durch Ziehen eines Drahtes aus einem zylindrischen Primär-Nachweiskörper und wahlweise Ablängen des Drahtes, erzeugt werden.

14. Verfahren zur Herstellung einer Nachweisanordnung (10; 20) nach einem der Ansprüche 1 bis 7, wobei die verschiedenen Nachweiskörper (13, 15, 17; 23, 25, 27, 29) aus abgewogenen Pulvern der Legierungsbestandteile in verschiedenen vorbestimmten Massenverhältnissen und Durchmischen und Verpressen oder sintern und wahlweise Aufschmelzen der verpressten Pulvermischungen oder aus Blech- oder Folienzuschnitten der einzelnen Regierungsbestandteile mit unterschiedlichen Dicken und/oder Flächen und Aufschmelzen der zusammen gestellten Blech- bzw. Folienzuschnitte gebildet werden.

15. Verfahren zur Herstellung einer Nachweisanordnung (10, 20) nach einem der Ansprüche 1 bis 7, wobei die Nachweiskörper (13, 15, 17; 23, 25, 27, 29) aus einer Legierungs-Preform, insbesondere mit zylindrischer Gestalt, unter Einsatz eines Zonenschmelzverfahrens mit vorbestimmtem Ablauf und/oder mit mehrfachem zonenweisem Aufschmelzen und Schneiden der Nachweiskörper aus vorgegebenen Abschnitten des dem Umschmelzverfahren unterzogenen Preform erzeugt werden.
